Europäisches Patentamt

European Patent Office

Office européen des brevets

(19)

(11) Veröffentlichungsnummer: **0 085 274**
**B1**

(12) # EUROPÄISCHE PATENTSCHRIFT

(45) Veröffentlichungstag der Patentschrift:
**29.05.85**

(51) Int. Cl.⁴: **B 23 K 3/02**

(21) Anmeldenummer: **82730151.6**

(22) Anmeldetag: **23.12.82**

(54) **Schutzisolierter elektrischer Lötkolben.**

(30) Priorität: **05.01.82  DE 8200234 U**

(43) Veröffentlichungstag der Anmeldung:
**10.08.83 Patentblatt 83/32**

(45) Bekanntmachung des Hinweises auf die Patenterteilung:
**29.05.85 Patentblatt 85/22**

(84) Benannte Vertragsstaaten:
**BE CH DE FR GB IT LI NL**

(56) Entgegenhaltungen:
**DE - A - 1 638 061**
**DE - A - 2 746 097**
**DE - U - 8 200 234**
**US - A - 4 152 576**

(73) Patentinhaber: **ERSA Ernst Sachs KG GmbH & Co.,**
**Leonhard-Karl-Strasse 24, D-6980 Wertheim / Main (DE)**

(72) Erfinder: **Hombrecher, Fritz, Oberer Neuberg 9,**
**D-6980 Wertheim/Main (DE)**

(74) Vertreter: **Lüke, Dierck-Wilm, Dipl.-Ing.,**
**Gelfertstrasse 56, D-1000 Berlin 33 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Es sind schutzisolierte elektrische Lötkolben der gattungsgemäßen Art der Schutzklasse I mit Netzerde und der Schutzklasse II ohne Netzerde bekannt, wobei letztere doppelt-schutzisoliert sind. Die bisher verwendeten schutzisolierten elektrischen Lötkolben können dann nicht eingesetzt werden, wenn Lötarbeiten an sogenannten EMS-Geräten durchgeführt werden sollen, die mit hochintegrierten Halbleiterbauelementen bestückt sind und bei Kommunikationssystemen neuer Technologien eingesetzt werden. Die bekannten schutzisolierten elektrischen Lötkolben können bei diesen Arbeiten deshalb nicht eingesetzt werden, weil durch elektrostatische Aufladungen an der Lötspitze, die durch Berührung und Trennung zweier Materialien entstehen, oder durch Störspannungen und kapazitive Einstreuungen aus dem Leitungsnetz die hochempfindlichen Halbleiterbauelemente zerstört werden können. Diese Halbleiterbauelemente sind auch unter der Bezeichnung MOS-Bauelemente bekannt.

Es ist zwar prinzipiell möglich, bei solchen hochempfindlichen Arbeiten Lötgeräte zu verwenden, die aus einem Kleinspannungslötkolben und einem galvanisch vom Leitungsnetz getrennten Sicherheitstransformator bestehen und eine Potentialausgleichsmöglichkeit mit ca. 100—200 Kiloohm bieten. Derartige Lötgeräte sind jedoch aus Gewichts-, Kosten- und Platzgründen für den mobilen Einsatz zur Lötung von EMS-Geräten mit hochintegrierten Halbleiterbauelementen nicht geeignet.

Der Erfindung liegt von daher die Aufgabe zugrunde, einen mit der Netzspannung von regelmäßig 220 Volt betriebenen schutzisolierten elektrischen Lötkolben der gattungsgemäßen Art in baulich einfacher Weise mit zusätzlichen elektrischen Bauteilen derart zu versehen, daß sowohl ein Löten von sogenannten EMS-Geräten, die mit hochintegrierten Halbleiterbauelementen bestückt sind, als auch ein Löten herkömmlicher Geräte mit ein- und demselben Lötkolben möglich ist.

Die Lösung dieser Aufgabe ergibt sich aus den kennzeichnenden Merkmalen des Patentanspruches 1. Durch Einsetzen des ein RC-Glied bildenden Ableitbausteines in die Netzerde-Zuleitung des Lötkolbens wird auch ein Löten von mit hochintegrierten Halbleiterbauelementen bestückten EMS-Geräten ermöglicht. Das RC-Glied kann sowohl im Lötkolben selbst, als auch im Netzstecker untergebracht sein, ist aber in bevorzugter Ausführungsform im Lötkolben untergebracht.

Da in weiterer Ausbildung der Erfindung der stielrohrseitige Netzerde-Klemmteil mechanisch lösbar mit dem Stielrohr verbunden ist, kann die elektrische Netzerde-Verbindung auch leicht wieder gelöst werden, so daß auch Lötarbeiten an herkömmlichen Geräten möglich sind.

Die lösbare Verbindung kann in weiterer erfindungsgemäßer Weise entweder aus einem Schalter bestehen, der in der Wandung des Handgriffes angeordnet ist und im Innenraum des Handgriffes den stielrohrseitigen Netzerde-Klemmenteil trägt, oder aus einer Steckverbindung oder einer Federklemme, die in einfacher Weise auf das Stielrohr aufklemmbar ist.

In besonders bevorzugter Weise befindet sich der stielrohrseitige Netzerde-Klemmenteil auf einem die beiden Anschlußklemmen der elektrischen Zuleitungen tragenden Klemmenträger, der in den Innenraum des Handgriffes fest eingeschoben ist, wobei der stielrohrseitige Netzerde-Klemmenteil den Leiterplattenkörper trägt, auf welchem der Netzerde-Klemmenteil auf der Seite des Anschlußkabels angeordnet ist.

Die Erfindung ist nachfolgend anhand eines in der Zeichnung dargestellten schutzisolierten elektrischen Lötkolbens und anhand eines Schuko-Steckers für den Lötkolben näher erläutert. Es zeigt

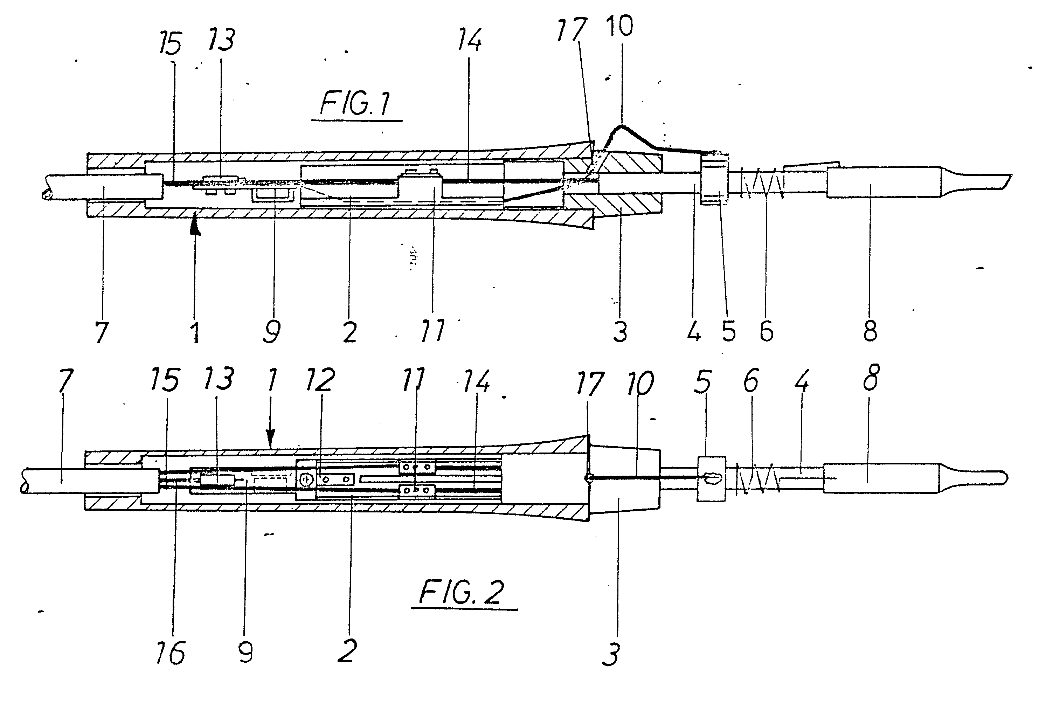

Fig. 1 eine Seitenansicht des Lötkolbens mit geschnitten dargestelltem Handgriff,

Fig. 2 eine Draufsicht auf den Lötkolben,

Fig. 3 eine Prinzipskizze der elektrischen Schaltung innerhalb des Lötkolbens und

Fig. 4 eine Prinzipdarstellung des Schuko-Steckers für den Lötkolben mit eingebautem Ableitbaustein.

Der dargestellte schutzisolierte elektrische Lötkolben besteht aus einem hohl-zylindrischen Handgriff 1 aus Kunststoff, der an seinem einen Ende das elektrische Anschlußkabel 7 für eine Netzspannung von 220 Volt und an seinem anderen Ende über ein Verbindungteil 3 ein Stielrohr 4 mit darin befindlichem Heizkörper 20 trägt, an dessen Ende eine Lötspitze 8 aufgeschoben und über eine Feder 6 festgelegt ist.

In den Innenraum des einstückig aus Kunststoff gefertigten Handgriffes 1 ist ein Anschlußklemmenträger 2 eingeschoben, der isoliert voneinander zwei Anschlußklemmen 11 aufweist, die zur Verbindung der elektrischen Zuleitungen 15 des mit einer Spannung von 220 Volt versorgten Anschlußkabels 7 mit den elektrischen Zuleitungen 14 des im Stielrohr 4 befindlichen Heizkörpers 20 dienen. Der Anschlußklemmenträger 2 besteht aus Kunststoff.

Der Anschlußklemmenträger 2 trägt ferner auf der dem Verbindungteil 3 für das Stielrohr 4 abgelegenen Seite einen Netzerde-Klemmenteil 12, in welchem ein Leiterplattenkörper 9 mittels eines Netzerde-Anschlußdrahtes festgelegt ist. Der Leiterplattenkörper 9 selbst trägt an seinem anderen Ende ein weiteres Netzerde-Klemmenteil 13, das mit der Netzerde-Zuleitung 16 verbunden ist. Das RC-Glied des Leiterplattenkörpers 9 besteht aus einem Widerstand 18 von 100 Kiloohm und einem Kondensator 19 von 120 Nanofarad, die parallel zueinander geschaltet sind.

Vom stielrohrseitigen Netzerde-Klemmenteil 12 verläuft ein Netzerde-Anschlußdraht 10 durch den Anschlußklemmenträger 2 hindurch, tritt durch eine im wesentlichen radial gerichtete Bohrung 17 aus dem Verbindungsteil 3 zwischen dem Handgriff 1 und dem Stielrohr 4 hinaus und endet an einer Federklemme 5, welche mechanisch lösbar auf die Außenseite des Stielrohres 4 eingeklemmt ist.

In nicht näher dargestellter Weise können anstelle der Klemmen 12, 13 auch Lötstellen als Verbindungen zwischen der netzseitigen Erdleitung 16 und dem Anschlußdraht 10 dienen. Dabei kann der zwischen die Lötstellen eingesetzte Leiterplattenkörper 9 mit dem RC-Glied in eine Aufnahmeöffnung im Anschlußklemmenträger 2 eingeschoben sein.

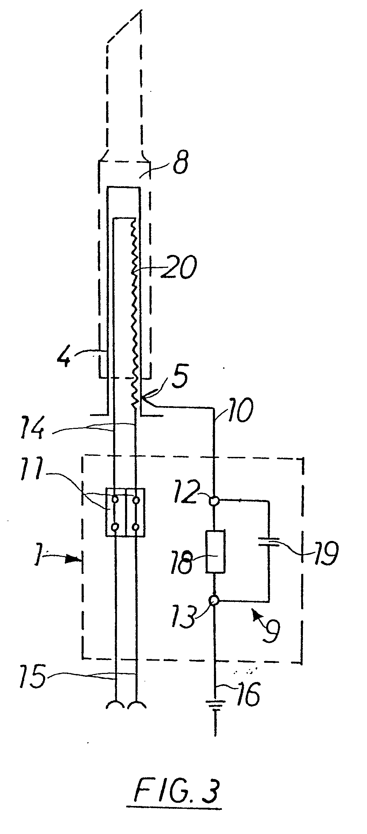

Die in Fig. 3 dargestellte Prinzipskizze zeigt die elektrischen Verbindungen zwischen den Netzzuleitungen 15 und den elektrischen Zuleitungen 14 für den Heizkörper 20 über die Klemmen 11, sowie die elektrische Verbindung der netzseitigen Erdleitung 16 mit dem Netzerde-Anschlußdraht 10 über die zwischen die Anschlußklemmen 12 und 13 eingeschaltete Leiterplatte 9, welche den Widerstand 18 und den Kondensator 19 als RC-Glied trägt.

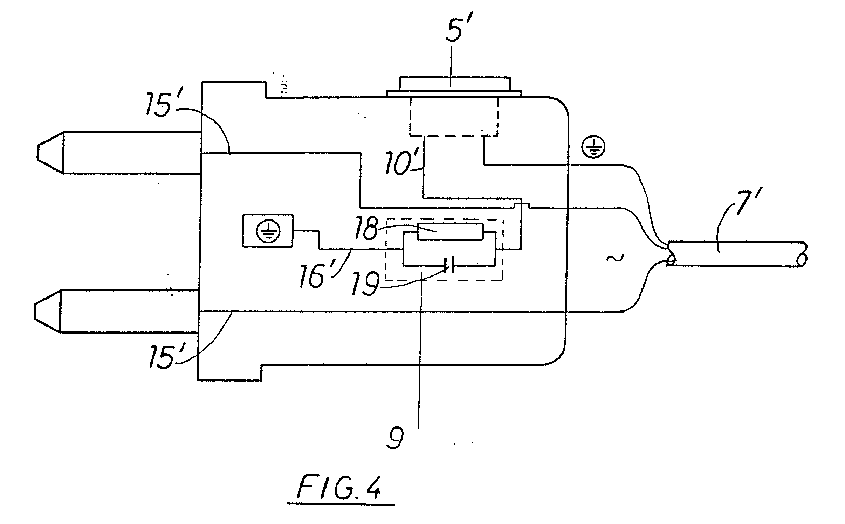

Die in Fig. 4 dargestellte Prinzipzeichnung eines Schukosteckers für einen elektrischen Lötkolben zeigt die Netzerde-Zuleitung 16', die Leiterplatte 9' mit dem Ableitbaustein als RC-Glied aus dem Widerstand 18 und dem parallel geschalteten Kondensator 19, sowie den Netzerde-Anschlußdraht 10' zum nicht dargestellten Lötkolben, wobei in den Anschlußdraht 10' ein Schiebeschalter 5' eingesetzt ist, mit welchem das RC-Glied ein- und ausschaltbar ist. Die elektrischen Zuleitungen 15' zum Heizkörper 20 durch das Zuleitungskabel 7' sind prinzipartig dargestellt. Der Lötkolben selbst weist bei dieser Ausführungsform kein weiteres RC-Glied mehr auf.

## Patentansprüche

1. Schutzisolierter elektrischer Lötkolben mit einer Netzerde-Zuleitung, dadurch gekennzeichnet, daß in die Netzerde-Zuleitung (10, 16) ein aus einem Widerstand (18) und einem dazu parallel geschalteten Kondensator (19) bestehendes, einen Ableitbaustein bildendes RC-Glied eingeschaltet ist.

2. Lötkolben nach Anspruch 1, mit einem im Handgriff befestigten, einen Heizkörper aufnehmenden Stielrohr, dadurch gekennzeichnet, daß das RC-Glied auf einer zwischen zwei Netzerde-Anschlußklemmen (12, 13) eingesetzten Leiterplatte (9) angeordnet ist und daß der stielrohrseitige Netzerde-Anschlußklemmenteil (12) mechanisch lösbar mit dem Stielrohr (4) verbunden ist.

3. Lötkolben nach Anspruch 2, dadurch gekennzeichnet, daß die Klemmenteile (12, 13) im Innenraum des Handgriffes (1) hintereinander angeordnet sind.

4. Lötkolben nach Anspruch 2, dadurch gekennzeichnet, daß in der Wandung des Handgriffes (1) ein Schalter angeordnet ist, der im Innenraum des Handgriffes (1) den stielrohrseitigen Netzerde-Klemmenteil (12) trägt.

5. Lötkolben nach Anspruch 3, dadurch gekennzeichnet, daß der stielrohrseitige Netzerde-Klemmenteil (12) über eine Steckverbindung mit dem Stielrohr (4) mechanisch lösbar verbunden ist.

6. Lötkolben nach Anspruch 6, dadurch gekennzeichnet, daß der stielrohrseitige Netzerde-Klemmteil (12) über eine auf dem Stielrohr (4) aufklemmbare Federklemme (5) mit dem Stielrohr (4) mechanisch lösbar verbunden ist.

7. Lötkolben nach einem der Ansprüche 1 bis 6, dadurch gekennzeichnet, daß die beiden Anschlußklemmen (11) der elektrischen Zuleitungen (14) zum im Stielrohr (4) angeordneten Heizkörper und der stielrohrseitige Netzerde-Klemmenteil (12) isoliert voneinander auf einem in den Innenraum des Handgriffes (1) eingeschobenen Klemmenträger (2) angeordnet sind.

8. Lötkolben nach einem der Ansprüche 1 bis 7, dadurch gekennzeichnet, daß der Netzerde-Klemmenteil (13) auf der Seite des Anschlußkabels (7) auf dem im Klemmenträger (2) befestigten Leiterplattenkörper (9) angeordnet ist.

## Claims

1. Double-insulated soldering iron with ground conductor, characterized by that an RC circuit is contained in the ground conductor (10, 16), this RC circuit consisting of a resistor (18) and a parallel capacitor (19) serving as by-pass component.

2. Soldering iron according to claim 1, comprising a tube being fastened to a handle and accommodating a heating element, characterized by that the RC circuit is arranged on a printed circuit board (9) being placed between two ground conductor terminals (12, 13) and that the ground conductor terminal part (12) adjacent to the tube is connected to the tube in a mechanically releasable manner.

3. Soldering iron according to claim 2, characterized by that the terminal parts (12, 13) are arranged one behind the other in the interior of the handle.

4. Soldering iron according to claim 2, characterized by that in the wall of the handle (1) a switch is arranged supporting the ground conductor terminal part (12) adjacent to the tube inside the handle (1).

5. Soldering iron according to claim 3, characterized by that the ground conductor terminal part (12) adjacent to the tube is connected in a mechanically releasable manner to the tube (4) over a plug connection.

6. Soldering iron according to claim 5, characterized by that the ground conductor terminal part (12) adjacent to the tube is connected in a mechanically releasable manner to the tube (4) over an attachable clip (5).

7. Soldering iron according to one of claims 1 to 6, characterized by that the two connection terminals (11) of the electric leads (14) to the heating element integrated in the tube (4) and the ground conductor terminal part (12) adjacent to the tube are arranged insulated from each other on a terminal holder (2) inserted into the interior of the handle (1).

8. Soldering iron according to one of claim 1 to 7, characterized by that the ground conductor terminal part (13) at the side of the connection cable (7) is arranged on the printed circuit body (9) mounted in the terminal holder (2).

**Revendications**

1. Fer à souder électrique à double isolation avec conduite réseau-terre, caractérisé par le fait qu'un circuit RC formant élément de déviation et comprenant une résistance (18) et un condensateur (19) monté en parallèle est connecté dans la conduite réseau-terre (10, 16).

2. Fer à souder selon revendication 1 avec un tube de manche pouvant recevoir un corps de chauffe fixé dans la poignée, caractérisé par le fait que le circuit RC est disposé sur une plaquette à circuit imprimé logée entre deux bornes de branchement réseau-terre (12, 13) et que la partie bornes réseau-terre (12) côté tube de manchon est reliée avec le tube de manchon (4) de sorte à pouvoir être enlevée mécaniquement.

3. Fer à souder selon revendication 2, caractérisé par le fait que les parties bornes (12, 13) sont disposées en tandem à l'intérieur de la poignée (1).

4. Fer à souder selon revendication 2, caractérisé par le fait qu'un interrupteur est logé dans la paroi de la poignée (1) portant, à l'intérieur de la poignée (1) la partie bornes réseau-terre (12) côté tube de manche.

5. Fer à souder selon revendication 3, caractérisé par le fait que la partie bornes réseau-terre (12) est reliée par fiches avec le tube de manchon (4) pouvant être ainsi détachée mécaniquement.

6. Fer à souder selon revendication 5, caractérisé par le fait que la partie bornes réseau-terre (12) côté tube de manche est reliée avec le tube de manche (4) par une borne à ressorts (5) pouvant être fixée sur le tube de manche (4) et que la partie bornes peut ainsi être détachée mécaniquement.

7. Fer à souder selon L-une des revendications 1 à 6, caractérisé par le fait que les deux bornes de branchement (11) des conduites d'amenée électriques (14) vers le corps de chauffe logé dans le tube de manche (4) et la partie bornes réseau-terre (12) côté tube de manche sont montées sur un porte-bornes (2) glissé à l'intérieur de la poignée (1) et isolées les unes par rapport à l'autre.

8 Fer à souder selon l'une des revendications 1 à 7, caractérisé par le fait que la partie bornes réseau-terre (13) est disposée sur le corps de plaquettes à circuit imprimé (9) fixé sur le porte-bornes (2) du côté câble de branchement (7).

FIG.1

FIG.2

*FIG. 3*

FIG.4